# FASCICULE DE BREVET EUROPEEN

(11) **EP 2 794 419 B1**
(45) Date de publication et mention de la délivrance du brevet: **30.03.2016**
(21) Numéro de dépôt: 12781334.3
(22) Date de dépôt: 08.11.2012
(51) Int. Cl.: B65D 57/00, B32B 17/00

(54) **SÉPARATEUR POUR PANNEAUX RIGIDES, PROCÉDÉ DE FABRICATION DE PANNEAUX DE VITRAGE, SUPPORT DE PANNEAUX RIGIDES ET SYSTÈME COMPORTANT UN AUTOCLAVE ET UN SÉPARATEUR**
ABSTANDSHALTER FÜR FESTE PANEELE, HERSTELLUNGSVERFAHREN VON GLASPANEELEN, TRÄGER FÜR PANEELE UND SYSTEM MIT EINEM AUTOKLAVEN UND EINEM ABSTANDSHALTER
SPACER FOR RIGID PANELS, METHOD OF FABRICATION OF RIGID GLASS PANELS, SUPPORT FOR RIGID PANELS AND SYSTEM COMPRISING AN AUTOCLAVE AND A SPACER

(30) Priorité: 23.12.2011 BE 201100759
(43) Date de publication de la demande: 29.10.2014
(73) Titulaire: AGC Glass Europe, 1348 Louvain-La-Neuve (BE)
(72) Inventeur: CHEPPE, Eric, 6041 Gosselies (BE); LISMAN, Vanessa, 6041 Gosselies (BE); PIERRE, Laurent, 6041 Gosselies (BE)
(74) Mandataire: Chabou, Samia
(86) Numéro de dépôt international: PCT/EP2012/072095
(87) Numéro de publication internationale: WO 2013/091987

(56) Documents cités:
- EP-A1- 0 375 563
- WO-A1-96/16881
- BE-A6- 1 014 160
- DE-U1-202010 002 795

## Description

### 1. Domaine de l'invention

L'invention concerne un séparateur pour panneaux rigides, en particulier des panneaux de vitrage feuilletés. L'invention concerne également un autoclave et un support comprenant des panneaux rigides séparés par un tel séparateur.

### 2. Solutions de l'art antérieur

Dans l'industrie du verre, afin de transporter simultanément plusieurs panneaux de vitrage, on utilise des supports tels que des chevalets. Des séparateurs sont prévus entre les panneaux ou groupes de panneaux (par exemple de 2 à 10 panneaux). Ceux-ci sont positionnés le long des panneaux de vitrage à séparer en nombre suffisant afin de répartir la charge et éviter les contraintes mécaniques sur lesdits panneaux. Ainsi un espace est créé entre chaque panneau ou groupe de panneaux de vitrage facilitant ainsi leur transfert par exemple d'un chevalet à un autre ou du producteur au client. Les séparateurs connus sont habituellement en matière métallique, plastique ou en papier. On connaît de l'art antérieur des séparateurs verticaux en carton pour des panneaux de vitrage utilisés pour transporter des panneaux conditionnés sur des chevalets. On connaît également des séparateurs horizontaux en aluminium pour autoclaver les panneaux de vitrage feuilletés.

Par exemple, US5,921,393 décrit notamment un séparateur en carton pour panneaux de vitrage utilisé pour transporter simultanément plusieurs panneaux de vitrage.

Cependant, les séparateurs selon US5,921,393 ne peuvent être utilisés pour autoclaver les panneaux de vitrage et en particulier les panneaux de vitrage feuilletés. Sous l'effet de la chaleur, la cornière se désolidarise de la bande support et l'intercalaire, présent dans le panneau de vitrage feuilleté, adhère à la cornière. Le séparateur ne peut alors pas être retiré sans risquer d'endommager le panneau de vitrage.

Quant aux séparateurs horizontaux en aluminium, compte-tenu de leur prix, ils ne sont utilisés que pour autoclaver les panneaux de vitrage feuilletés. Ainsi, une fois les panneaux de vitrage autoclavés, il faut remplacer les séparateurs en aluminium par des séparateurs verticaux en carton dédiés au transport des panneaux de vitrage.

Un autre séparateur est également connu de EP 0 375 563.

Les séparateurs de l'art antérieur ne sont donc pas adaptés pour être utilisés à la fois pour autoclaver et pour transporter les panneaux de vitrage. Jusqu'à aujourd'hui, afin d'autoclaver les panneaux de vitrage et particulièrement les panneaux de vitrage feuilletés, il était nécessaire de séparer lesdits panneaux conditionnés sur un support par des séparateurs horizontaux en aluminium. Une fois autoclavés, les panneaux étaient alors transférés sur un autre support adapté pour leur transport. Les panneaux étaient alors séparés par des séparateurs verticaux en carton. Cela représente donc un coût pour l'entreprise qui doit constamment disposer de deux types de séparateurs.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir un séparateur qui permette de réduire les coûts globaux industriels liés à la production et au transport des panneaux rigides, préférentiellement des panneaux de vitrage et plus préférentiellement des panneaux de vitrage feuilletés.

Plus précisément, un objectif de l'invention, dans au moins un de ses modes de réalisation, est de fournir un tel séparateur qui présente un coût réduit.

Plus précisément, un objectif de l'invention, dans au moins un de ses modes de réalisation, est de fournir un tel séparateur qui permette de réduire le nombre d'étapes lors de la production de panneaux rigides, préférentiellement des panneaux de vitrage et encore plus préférentiellement des panneaux de vitrage feuilletés.

Plus précisément, un objectif de l'invention, dans au moins un de ses modes de réalisation, est de fournir un tel séparateur qui puisse être utilisé à la fois lors de la production et lors du transport des panneaux rigides, préférentiellement des panneaux de vitrage et plus préférentiellement des panneaux de vitrage feuilletés.

### 4. Exposé de l'invention

Conformément à un mode de réalisation particulier, l'invention concerne un séparateur pour séparer au moins un premier panneau rigide d'au moins un second panneau rigide, le séparateur comprenant une bande de support et une cornière à l'une au moins des extrémités de ladite bande, le séparateur étant fabriqué au moins en partie dans un matériau de type papier

Selon l'invention, un tel séparateur comprend une cornière revêtue dans sa partie en contact avec la tranche d'au moins un desdits panneaux d'un revêtement anti-adhérent.

Bien entendu, le panneau constitué d'un matériau rigide peut être plan ou même cintré (par exemple un panneau de verre bombé).

Dans un des modes de réalisation particuliers de l'invention, les premier et second panneaux rigides sont des panneaux de vitrage.

On entend par « panneau de vitrage», un panneau comprenant au moins une feuille de verre plan, transparent, clair ou coloré (par exemple vert, gris, bronze ou bleu), à faces parallèles. Il peut s'agir par exemple de panneaux de vitrage isolants multiples tel qu'un simple, double et triple vitrage, des panneaux de vitrage isolants à couche magnétron, des panneaux de vitrage à couche pyrolytique, des panneaux de vitrage décoratifs, des panneaux de vitrage colorés, des panneaux de vitrage trempés, des panneaux de vitrages sous vide, des paneaux de vitrage feuilletés ou laminés, ...

Bien entendu, on entend par « verre », tous les types de verres et matériaux transparents équivalents tels que les verres minéraux et les verres organiques. Le verre minéral peut être constitué indifféremment d'un ou plusieurs types de verres connus comme les verres sodo-calcique, les verres au bore, les verres au plomb, les verres comprenant un ou plusieurs additifs répartis de manière homogène dans sa masse, tels que, par exemple, au moins un colorant inorganique, un composé oxydant, un agent régulateur de la viscosité et/ou un agent facilitant la fusion, les verres cristallins et semi-cristallins. Le verre organique peut être un polymère ou un copolymère transparent thermodurcissable ou thermoplastique rigide tel que, par exemple, une résine de synthèse polycarbonate, polyester ou polyvinylique transparente. De préférence, le verre de l'invention est de type silico-sodo-calcique. Le verre de l'invention peut être un verre flotté, un verre étiré ou un verre imprimé. Il peut être clair, extra-clair, coloré dans la masse, sablé et/ou maté. L'expression "verre sodo-calcique" est utilisée ici dans son sens large et concerne tout verre qui contient les composants de base suivants (exprimés en pourcentages en poids total de verre) :

| | |
|---|---|
| SiO2 | 60 à 75 % |
| Na2O | 10 à 20 % |
| CaO | 0 à 16 % |
| K2O | 0 à 10 % |
| MgO | 0 à 10 % |
| Al2O3 | 0 à 5 % |
| BaO | 0 à 2 % |
| BaO + CaO + MgO | 10 à 20 % |
| K2O + Na2O | 10 à 20 %. |

Selon un mode de réalisation particulier de l'invention, la feuille de verre est une feuille de verre flotté. De préférence, la feuille de verre est une feuille de verre flotté de type silico-sodo-calcique. Toujours selon ce mode de réalisation, la feuille de verre flotté de l'invention peut avoir une épaisseur variant, par exemple, de 1 à 12 mm.

La feuille de verre selon l'invention peut avoir une taille supérieure à 1m x 1m. Elle peut avoir une taille connue sous le nom de « PLF » (par exemple 3,21m x 6m ou 3,21m x 5,50m ou 3,21m x 5,10 m 3,21m x 4,50 m) ou une taille connue sous le nom de « DLF » (par exemple 3,21m x 2,50m ou 3,21m x 2,25m).

Dans un des modes de réalisation particuliers de l'invention, le premier et le second panneaux rigides sont des panneaux de vitrage feuilletés comprenant chacun au moins une première et une seconde feuille de verre feuilletées (collées) ensembles grâce à au moins un intercalaire thermoplastique.

Dans la suite de la description, on entend par « panneau de vitrage feuilleté », un panneau comprenant au moins une première et une seconde feuille de verre, assemblées sur toute leur surface par un intercalaire thermoplastique. L'intercalaire peut être un ou plusieurs films thermoplastiques tels que le polyvinyl butyral (PVB), l'éthylène vinyle acétate (EVA), le polyuréthane (PU), une résine ou un gel. Il a pour fonction de coller les feuilles de verre entre elles. Il peut s'agir de panneaux de vitrage feuilletés résistants au feu, des panneaux de vitrage feuilletés de sécurité, des panneaux de vitrage feuilletés décoratifs...

Lors de la fabrication des panneaux de vitrage feuilletés avec ce type d'intercalaire, un mode de réalisation particulier de l'invention prévoit que les panneaux (non encore transparents) soient stockés sur des supports tels que par exemple des chevalets en vue de leur passage dans l'autoclave. Les chevalets sont alors placés dans un autoclave, à pression et température élevées, de manière à obtenir l'adhésion et la transparence finale du produit. Il est entendu qu'un « autoclave » est une étuve dans laquelle un cycle de température et de pression est appliqué durant un temps défini, on parle alors de « cycle d'autoclave ». La température est de manière générale comprise entre 25 et 200°C et la pression entre 0 et 15 bars.

On entend par «support», tout matériel sur lequel sont conditionnés, stockés, disposés au moins un panneau rigide et au moins un second panneau rigide. Selon un mode particulier de l'invention, le premier et le second panneaux rigides sont des panneaux de vitrage, et plus préférentiellement des panneaux de vitrage feuilletés, séparés par au moins un séparateur selon l'invention. Par exemple, dans l'industrie du verre feuilleté, on utilise classiquement deux types de support :
- Le premier support sur lequel sont conditionnés, stockés, les panneaux de vitrage permet de les autoclaver. On parle alors de « support autoclave ». Un tel support peut être par exemple un chevalet en A ou L. Le chevalet en A comprend deux versants : un versant droit (A) et un versant gauche (B).
- Le second support est utilisé pour transporter les panneaux de vitrage du producteur au client. Un tel support est adapté de façon à minimiser les mouvements des panneaux durant leur transport par camion ou tout autre moyen de transport. On parle alors de « support de transport ». Ce support peut également être par exemple un chevalet en A ou en L.

Durant le cycle d'autoclave, l'intercalaire thermoplastique sous l'effet de la chaleur et de la pression élevées fond et peut déborder de chaque côté du panneau de vitrage. Si le séparateur n'est pas adapté, alors l'intercalaire adhère au séparateur, via la cornière. Il ne peut alors être retiré aisément sans risquer d'endommager le panneau de vitrage et le séparateur.

Ainsi, le revêtement de la cornière, en particulier de la partie de la cornière en contact avec la tranche d'au moins un des panneaux rigides, et en particulier un des panneaux de vitrage feuilletés, est anti-adhérent. Grâce à ce revêtement, l'intercalaire thermoplastique n'adhère pas à la cornière lors du cycle d'autoclave.

Le séparateur selon l'invention présente donc l'avantage d'être peu coûteux et de pouvoir être utilisé à la fois lors de la production et du transport des panneaux rigides et particulièrement des panneaux de vitrage et encore plus particulièrement des panneaux de vitrage feuilletés.

Dans un des modes de réalisation particuliers de l'invention, ladite cornière est revêtue d'un revêtement anti-adhérent comprenant l'un au moins des matériaux suivants :
- du Téflon,
- des polyoléfines (polyéthylène et polypropylène),
- des silicones....

Ce type de revêtement a l'avantage d'être un matériau anti-adhérent à faible taux de collage et donc présentant une faible tension de surface car peu polaire.

Avantageusement, le séparateur selon l'invention est positionné de manière verticale entre au moins un premier panneau rigide et au moins un second panneau rigide. Dans un des modes de réalisation particuliers de l'invention, le séparateur est positionné entre au moins un premier panneau de vitrage feuilleté et au moins un second panneau de vitrage feuilleté. Ainsi, le séparateur ne requiert qu'une cornière à l'une de ses extrémités et peut être positionné rapidement entre plusieurs panneaux sans craindre que celui-ci ne glisse entre lesdits panneaux durant le cycle d'autoclave et/ou le transport des panneaux. De plus, le séparateur n'a pas besoin de s'étendre sur toute la hauteur des panneaux à autoclaver et/ou à transporter, réduisant ainsi le coût de production du séparateur. En outre, le fait d'avoir des séparateurs verticaux lors du cycle d'autoclave permet que les supports tels que des chevalets sur lesquels sont conditionnés les panneaux destinés à être autoclavés ne nécessitent alors plus d'adaptation particulière. Le séparateur selon l'invention tient sur le panneau rigide via la cornière.

De plus, les inventeurs ont montré que les panneaux rigides, préférentiellement les panneaux de vitrage et plus préférentiellement les panneaux de vitrage feuilletés, séparés par au moins un séparateur selon l'invention refroidissaient plus rapidement à la sortie de l'autoclave que les panneaux rigides séparés par des séparateurs horizontaux. Ainsi, le temps nécessaire au refroidissement des panneaux de vitrage est divisé par deux, passant alors de 32 heures à 16 heures. Grâce aux séparateurs selon l'invention, les inventeurs ont obtenu un gain de temps sur le temps global de production et une libération plus rapide des supports comprenant les panneaux rigides destinés à être autoclavés. Par conséquent, un nombre de support moins important est requis, réduisant ainsi les coûts de fabrication.

Selon une première mise en oeuvre avantageuse de l'invention, le séparateur pour séparer au moins un panneau rigide d'au moins un second panneau rigide est en matière papier, plus préférentiellement en carton, encore plus préférentiellement en papier Kraft. On préférera du papier Kraft de 100 à 1000 gr/m², de préférence entre 200 et 400 gr/m², ces valeurs n'étant aucunement limitatives. La bande de support comprend de préférence au moins une bande de panneau alvéolaire. Le panneau alvéolaire est un matériau très léger et rigide sur lequel la cornière revêtue d'un revêtement anti-adhérent peut être solidarisée facilement à l'une des extrémités de la bande de support.

Ainsi, le séparateur en carton et/ou en papier Kraft selon l'invention est à la fois résistant aux forces de cisaillement lorsqu'il est appliqué entre plusieurs panneaux rigides, préférentiellement entre des panneaux de vitrage et encore plus préférentiellement entre des panneaux de vitrage feuilletés, groupés, empilées les uns contre les autres, recyclable et peu coûteux.

Selon un mode de réalisation préférentiel de l'invention, le séparateur positionné de manière verticale selon l'invention est non ventilé.

On entend par « séparateur non ventilé », un séparateur qui s'oppose à la diffusion de l'air et particulièrement de l'air chaud au sein de l'autoclave. Le séparateur non ventilé ne présente aucun orifice permettant le passage de l'air à travers le séparateur. Ainsi, le séparateur vertical fabriqué dans un matériau de type papier, préférentiellement dans du carton et/ou du papier Kraft et non ventilé présente l'avantage de pouvoir conditionner un plus grand nombre de panneaux rigides et plus particulièrement des panneaux de vitrage et encore plus particulièrement des panneaux de vitrage feuilletés sur un support tel qu'un chevalet. Le séparateur ventilé présente une épaisseur plus élevée par rapport à un séparateur non ventilé et donc occupe plus de place sur un support limitant ainsi le nombre de panneaux rigides pouvant être conditionnés.

Conformément à un mode de réalisation préférentiel de l'invention, le séparateur comprend au moins une cornière qui est solidarisée à l'une des extrémités de la bande de support du séparateur grâce à une colle.

Selon l'invention, la colle utilisée pour solidariser la cornière à l'une des extrémités de la bande de support est une colle ayant une plage de fonctionnement en température qui présente une limite supérieure au moins égale à la température mise en oeuvre pour la fabrication du panneau de vitrage feuilleté. Lors de la fabrication des panneaux de vitrage feuilletés, les panneaux de vitrage sont soumis dans l'autoclave à des pressions et des températures élevées supérieures à 90°C et 3 bars. La colle selon l'invention présente l'avantage de résister aux températures élevées, notamment à des températures supérieures à 90°C, de préférence supérieures à 120°C. Ainsi, la cornière mise en oeuvre selon l'invention, ne se désolidarise pas de la bande de support durant le cycle d'autoclave. Lorsque la colle ne résiste pas à des températures élevées, la cornière se désolidarise de la bande de support, le séparateur, qui n'est alors plus retenu au panneau par la cornière, glisse entre les panneaux. La charge des panneaux n'est alors pas correctement répartie entraînant une déformation du panneau, tel qu'un bombage. Ainsi, le séparateur selon l'invention reste en état durant tout le cycle d'autoclave.

Conformément à un mode de réalisation préférentiel de l'invention la colle utilisée pour solidariser la cornière à la bande de support comprend au moins une des colles suivantes :
- une colle acrylique,
- une colle caoutchouc.

Ces colles présentent l'avantage d'être très résistantes à des températures élevées supérieures à 90°C, de préférence supérieure à 120°C. Ainsi, la cornière soumise à ces températures élevées ne risque pas de se désolidariser de la bande de support durant par exemple un cycle d'autoclave.

L'invention concerne également un procédé de fabrication de panneaux de vitrage feuilletés caractérisé en ce qu'il comprend une étape d'autoclavage des panneaux de vitrage feuilletés, ladite étape comprenant une étape de positionnement d'au moins un premier panneau de vitrage feuilleté et d'au moins un second panneau de vitrage feuilleté sur un support, lesdits panneaux étant séparés par au moins un séparateur selon l'invention.

On entend par « autoclavage », le cycle d'utilisation d'un autoclave.

Conformément au procédé de fabrication des panneaux de vitrage feuilletés mettant en oeuvre les séparateurs selon l'invention, les séparateurs sont positionnés de manière verticale entre au moins un premier et au moins un second panneaux de vitrage feuilletés.

Selon un mode de réalisation particulier du procédé de fabrication des panneaux de vitrage feuilletés selon l'invention, au moins un séparateur est positionné de manière à séparer au moins un premier groupe de premiers panneaux de vitrage feuilletés d'au moins d'un second groupe de seconds panneaux de vitrage feuilletés.

Selon un mode de réalisation préféré de l'invention, le séparateur selon l'invention permet de séparer au moins deux groupes de panneaux rigides, préférentiellement des panneaux de vitrage feuilletés. On entend par « groupe », n panneaux de vitrage feuilletés, lesdits groupes pouvant être reproduits m fois, avec n et m, différents ou égaux, supérieurs à 1. Selon une mise en oeuvre particulière de l'invention, le séparateur a pour rôle de séparer un nombre défini de groupes pouvant être transférés en une seule étape grâce à un dispositif de levage automatique encore appelé « griffe ». Par exemple, après le cycle d'autoclave, plusieurs groupes de panneaux de vitrage feuilletés peuvent être transférés d'un « support autoclave » vers un « support de transport » en une seule étape vu qu'il n'est plus nécessaire de changer de type de séparateur. Le nombre d'étapes dans la production des panneaux de vitrage feuilletés est alors considérablement diminué.

L'invention concerne également un support portant au moins un premier panneau rigide et au moins un second panneau rigide, lesdits panneaux rigides étant séparés par au moins un séparateur selon l'invention.

Selon un mode de réalisation préféré de l'invention, le support porte au moins un premier et au moins un second panneaux de vitrage feuilletés séparés par au moins un séparateur selon l'invention.

Selon une mise en oeuvre particulière du support selon l'invention, au moins un séparateur est positionné de manière à séparer au moins un premier groupe de premiers panneaux de vitrage feuilletés d'au moins d'un second groupe de seconds panneaux de vitrage feuilletés.

Selon une mise en oeuvre particulière du support selon l'invention, le support porte des panneaux rigides, préférentiellement des panneaux de vitrage et plus préférentiellement des panneaux de vitrage feuilletés, séparés par au moins un séparateur positionné de manière verticale, le séparateur comprenant une unique cornière (3) en son extrémité supérieure.

Par ailleurs, lorsqu'un support selon l'invention est utilisé pour autoclaver des panneaux rigides, particulièrement des panneaux de vitrage, encore plus particulièrement des panneaux de vitrage feuilletés séparés par au moins un séparateur selon l'invention positionné de manière verticale, l'autoclave est préférentiellement modifié.

Par conséquent, l'invention concerne également un système comportant au moins un séparateur selon l'invention et un autoclave pour autoclaver au moins un premier panneau de vitrage feuilleté et au moins un second panneau de vitrage feuilleté séparés par le au moins un séparateur selon l'invention, caractérisé en ce qu'il comprend des ouvertures latérales et une obturation partielle ou totale des canaux de ventilation latéraux au niveau de la porte dudit autoclave.

On entend par « ouvertures latérales », des ouvertures sur les parois latérales de l'autoclave qui permettent que le flux d'air horizontal diffusé au sein de l'autoclave puisse être redirigé verticalement au sein de l'autoclave. Ces ouvertures peuvent être par exemple des clapets pouvant être en position partiellement ou totalement ouverte ou partiellement ou totalement fermée.

Selon une mise en oeuvre particulière de l'autoclave selon l'invention, l'autoclave est utilisé pour autoclaver au moins un premier panneau de vitrage feuilleté et au moins un second panneau de vitrage feuilleté séparés par au moins un séparateur selon l'invention, caractérisé en ce que le dit séparateur est positionné de manière verticale, le séparateur comprenant une unique cornière en son extrémité supérieure.

Ainsi, l'autoclave a été modifié de manière à ce que le flux d'air puisse diffuser correctement entre tous les panneaux de vitrage. Une diffusion optimale de la chaleur au sein de l'autoclave a donc été obtenue sans que celle-ci ne soit entravée par les séparateurs non-ventilés positionnés de manière verticale entre les panneaux rigides, particulièrement des panneaux de vitrage, encore plus particulièrement des panneaux de vitrage feuilletés. Les autoclaves classiquement utilisés fonctionnent sur le principe d'un flux horizontal généré par un ventilateur et renvoyé via des canaux latéraux vers l'intérieur de la chambre. Par conséquent, sans modification de l'autoclave, les séparateurs verticaux s'opposent à la direction du flux. Les modifications apportées à l'autoclave résident en la création de clapets situés au bas des canaux latéraux et en l'obturation partielle ou totale des canaux latéraux. Le flux d'air, particulièrement le flux d'air chaud, diffusé au sein de l'autoclave est alors redirigé au travers des clapets et un flux vertical de bas en haut est généré ce qui permet une circulation d'air entre les séparateurs verticaux. La température au sein de l'autoclave est alors répartie uniformément sur tous les panneaux de vitrage.

L'invention concerne donc également un autoclave et des supports comprenant au moins un premier panneau rigide et au moins un second panneau rigide, préférentiellement au moins un premier et au moins un second panneaux de vitrage et encore plus préférentiellement au moins un premier et au moins un second panneaux de vitrage feuilletés, lesdits panneaux étant séparés par au moins un séparateur selon l'invention.

Les avantages du procédé de fabrication des panneaux de vitrage feuilletés ainsi que l'autoclave et le support portant de tels panneaux sont les mêmes que ceux des séparateurs selon l'invention, ils ne sont pas détaillés plus amplement.

### 5. Liste des figures

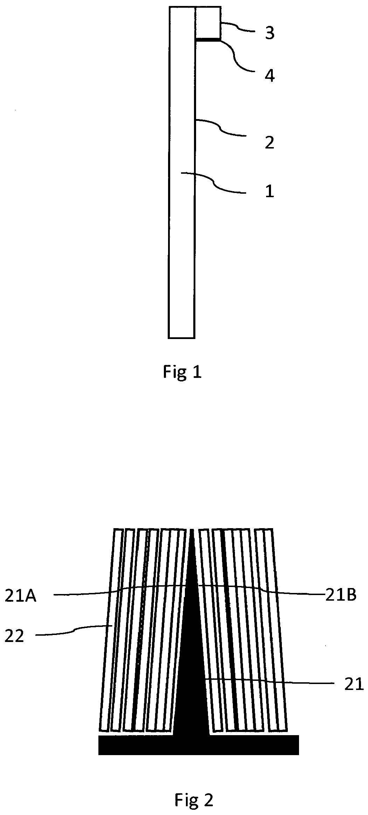

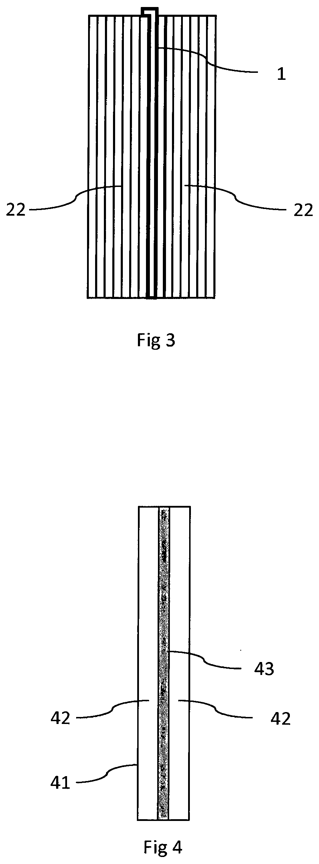

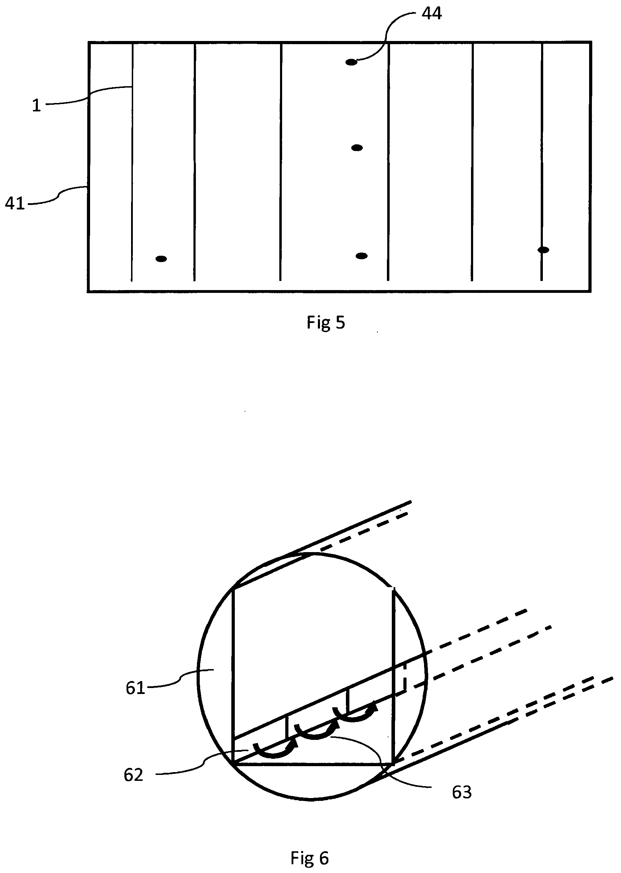

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- ***la*** ***figure 1*** présente un schéma d'un séparateur selon un mode de réalisation de l'invention,
- ***la*** ***figure 2*** présente schéma d'un chevalet en A comprenant dix groupes de sept panneaux rigides,
- ***la*** ***figure 3*** présente un schéma de deux groupes de sept panneaux de vitrage feuilletés séparés par un séparateur selon l'invention,
- ***la*** ***figure 4*** présente un schéma d'un panneau de vitrage feuilleté comprenant deux feuilles de verre et un intercalaire thermoplastique,
- ***la*** ***figure 5*** présente un schéma d'un panneau de vitrage feuilleté sur lequel sont répartis six séparateurs verticaux et dix thermocouples.
- *la* ***figure* 6** présente un schéma d'une vue en perspective d'un autoclave selon un mode de réalisation de l'invention.

### 6. Description d'au moins un mode de réalisation de l'invention

On présente, en relation avec la ***figure 1******,*** un séparateur 1 selon un mode de réalisation de l'invention.

Le séparateur 1 comprend une bande de support rectangulaire en « nid d'abeille » 2 munie à son extrémité supérieure d'une cornière en papier Kraft 3 revêtue dans sa partie en contact avec au moins un panneau rigide d'un revêtement anti-adhérent 4 en Téflon. Le revêtement anti-adhérent peut par exemple comprendre au moins un matériau parmi les polyoléfines (polyéthylène et polypropylène) et/ou les silicones. En outre, la cornière 3 est par exemple solidarisée à la bande de support 2 par collage grâce à une colle comprenant au moins une des colles suivantes :
- colle acrylique,
- colle caoutchouc.

Selon un mode de réalisation particulier de l'invention, le séparateur 1 selon la ***figure 1*** est un séparateur de type vertical non ventilé c'est-à-dire s'opposant à la diffusion de l'air et particulièrement de l'air chaud au sein de l'autoclave. Le séparateur non ventilé ne présente aucun orifice permettant le passage de l'air à travers le séparateur. Les dimensions préférées du séparateur sont 3150 mm de long, 20 mm d'épaisseur, une cornière 3 de 60 mm de largeur recouverte sur sa partie en contact avec la tranche du panneau de vitrage d'un revêtement en Téflon de 25 mm.

Un séparateur 1 selon l'invention a généralement une longueur inférieure à 3,5 m, de préférence inférieure ou égale à 3,21 m, une largeur comprise entre 50 et 120 mm, de préférence entre 55 et 90 mm et une épaisseur comprise entre 15 et 50 mm, de préférence entre 18 et 30 mm. Il présente également une force de compression de 1 à 10 kg/cm², de préférence 3,5 kg/cm². De préférence, la bande de support 2 comprend trois couches, deux couches externes et une couche centrale présentant une structure en « nid d'abeille ».

La bande de support 2 en « nid d'abeille » qui constitue la partie centrale du séparateur 1 est composée de bandes de papier, préférentiellement du papier Kraft d'un poids compris entre 100 et 500 g/m² et préférentiellement avec un poids de 240 g/m² par mètre carré, pliées et collées ensembles de façon à former une structure en nid d'abeille. La structure comprend une série d'espaces prismatiques et hexagonaux. Ces espaces prismatiques hexagonaux sont positionnés et collés par exemple, verticalement le long des deux couches externes qui constituent le séparateur selon l'invention de telle manière que les forces de cisaillement peuvent être transférées vers la face interne des couches externes. Ainsi la résistance de compression est accrue. La colle utilisée pour former la structure en « nid d'abeille » peut être une colle ordinaire adaptée pour le papier, cela peut être par exemple un dérivé d'amidon de pomme de terre pré-gélatiné ou une colle résistante à des températures élevées supérieures à 90°C, de préférence supérieures à 120°C, telle qu'une colle comprenant au moins une colle acrylique ou colle caoutchouc.

Selon une mise en oeuvre particulière de l'invention, le séparateur est utilisé lors de la fabrication des panneaux de vitrage feuilletés. De manière générale, la fabrication des panneaux de vitrage feuilletés comprend les étapes suivantes:
a) charger et nettoyer les feuilles de verre 42,
b) déposer l'intercalaire 43 sur une première feuille de verre 42, puis déposer la seconde feuille de verre sur l'intercalaire,
c) passer le panneau de vitrage feuilleté 41 dans une calandreuse : à température élevée, un rouleau passe sur le panneau de vitrage de manière à éliminer les bulles d'air incluses et à assurer un début de collage entre les feuilles de verre 42 et l'intercalaire 43,
d) stocker les panneaux de vitrage feuilletés (non encore transparents) sur des supports, tels que des chevalets 21,
e) placer les supports tels que des chevalets 21 dans un autoclave, à pression et température élevées.

Il est entendu que l'intercalaire peut être un ou plusieurs films thermoplastiques.

Selon une mise en oeuvre particulière de l'invention, lors de l'étape d) au moins un séparateur 1 selon l'invention est positionné entre au moins un panneau de vitrage feuilleté 41 et au moins un second panneau de vitrage feuilleté 41. Selon un mode particulier de l'invention, au moins un séparateur est positionné entre chaque groupe de panneaux de vitrage 22. Un groupe de panneaux 22 peut par exemple comprendre n panneaux de vitrage feuilletés, avec n compris entre 2 et 20, de préférence entre 4 et 15. Selon un mode de réalisation particulier de l'invention en relation avec les ***figures 2*** ***et*** ***3******,*** le séparateur 1 est mis en oeuvre de façon à séparer des groupes de panneaux de vitrage 22 conditionnés sur un chevalet en A 21. Le nombre de panneaux de vitrage pouvant être conditionnés sur un support est déterminé par la largeur du support, l'épaisseur des panneaux, l'épaisseur des séparateurs et le nombre n de panneaux par groupe de panneaux. Ce nombre n est limité par les conditions de flux d'air entre les groupes de panneaux lors du cycle de l'autoclave, le flux devant être suffisant pour qu'une chauffe suffisante et homogène soit obtenue en un temps raisonnable. La répartition et le nombre de séparateurs disposés entre au moins un premier et au moins un second panneaux de vitrage feuilleté 41 tient compte :
- de la longueur des panneaux à séparer,
- de la position des poussoirs hydrauliques (plus communément connus sous le nom d' «hydropushs ») présents dans les moyens de transports destinés au transport des panneaux de vitrage. Les poussoirs hydrauliques permettent de stabiliser les panneaux de vitrage disposés sur les supports durant le transport et éviter tout effort de flexion pouvant entraîner une déformation voire le bris des panneaux de vitrage. Le positionnement de ces poussoirs n'est pas régulier car il doit s'adapter aux variations de la longueur des panneaux de vitrages. Par exemple, la ***figure 5*** présente un schéma d'un panneau de vitrage de 6 m de long et 3,21 m de largeur, sur lequel ont été positionnés 6 séparateurs ; et
- de la charge. On entend «par charge », l'ensemble des panneaux de vitrage introduit dans l'autoclave. Elle doit également tenir compte du fait que le nombre de séparateurs ne fasse pas obstruction à la diffusion de la chaleur au sein de l'autoclave.

Ainsi le séparateur 1 selon l'invention a notamment pour rôle de séparer des groupes de panneaux de vitrage 22 disposés sur des supports tels que des chevalets afin qu'ils soient autoclavés. A l'étape d), les panneaux de vitrage feuillés n'ont pas l'adhérence et la transparence finale attendue. Les panneaux, comprenant l'intercalaire thermoplastique 43 sont alors autoclavés, (étape e)). Une température supérieure à 90°C et une pression d'au moins 3 bars est préférentiellement atteinte et maintenue pendant au moins 5 minutes en tout endroit de la charge pour obtenir l'adhérence et la transparence finale du panneau de vitrage feuilleté.
Après l'étape e), les panneaux de vitrage feuilletés 41 conditionnés alors sur le « support autoclave » sont transférés sur un « support de transport ». Le « support de transport » permet de garder les panneaux stables durant leur transport et éviter tout effort de flexion pouvant entraîner une déformation voire le bris des panneaux de vitrage. Les panneaux de vitrage peuvent être transférés un à un d'un support à un autre ou selon un mode de réalisation particulier de l'invention, les panneaux de vitrage sont transférés sous forme de groupes de panneaux. Grâce aux séparateurs selon l'invention disposés lors de l'étape d), plusieurs groupes de panneaux de vitrage feuilletés peuvent être transférés en une seule étape. Un système de levage automatique permet alors de transférer par exemple 3 groupes de n panneaux avec n compris entre 2 et 20 et de préférence entre 4 et 15 en une seule étape. Ainsi, les séparateurs sont déjà disposés de manière optimale pour le transport des panneaux c'est-à-dire tenant compte de la position des poussoirs hydrauliques. Le nombre d'étapes dans la fabrication des panneaux de vitrage feuilletés est ainsi considérablement diminué, les séparateurs selon l'invention ne devant pas être remplacés par des séparateurs exclusivement dédiés au transport des panneaux.

### Exemple 1 selon l'invention

Selon un mode particulier de l'invention, les séparateurs 1 sont utilisés lors de la fabrication des panneaux de vitrage feuilletés. Les panneaux de vitrage feuilletés 41, comme présentés dans la ***figure 4******,*** sont fabriqués en feuilletant (collant) au moins deux feuilles de verre 42 ensembles sur toute leur surface grâce à au moins un intercalaire thermoplastique 43. Un intercalaire thermoplastique peut être un ou plusieurs films thermoplastiques. Les feuilles de verre feuilletées sont ensuite passées dans une calandreuse de manière à éliminer les bulles d'air incluses entre les feuilles de verre et l'intercalaire et à assurer un début de collage entre les feuilles de verre et l'intercalaire thermoplastique. Les panneaux de vitrage feuilletés, qui ne sont pas encore transparents sont alors conditionnés sur des chevalets en A. Ainsi, en relation avec la ***figure 2****,* sept groupes de dix panneaux de vitrage feuilletés 22 ont été répartis sur les versants A et B d'un chevalet en A, soit au total 70 panneaux.

Chaque groupe de panneaux de vitrage feuilletés 22 a été séparé du groupe de panneaux suivant par des séparateurs 1 selon l'invention disposés de manière verticale sur la longueur du dernier panneau de chaque groupe de panneaux à séparer. Ainsi, comme le présente la ***figure 5**,* 6 séparateurs ont été respectivement disposés à 50, 132 et 244 cm des bords droit et gauche du panneau de vitrage 41 sur le dernier panneau de chaque groupe de panneaux à séparer.

Les séparateurs ont été répartis en tenant compte de la répartition de la charge et des forces mécaniques ainsi que de la position des poussoirs hydrauliques (« hydropushs) présents dans les moyens de transport des panneaux de vitrage.

Par ailleurs, l'autoclave a été modifié de manière à:
- améliorer le flux d'air chaud appliqué dans l'enceinte de l'autoclave et,
- maintenir une température constante d'au moins 90°C pendant au moins 5 minutes sur chaque panneau introduit dans l'autoclave.

En effet, les autoclaves classiquement utilisés dans le procédé de fabrication des panneaux de vitrage feuilletés fonctionnent sur le principe d'un flux horizontal généré par un ventilateur et renvoyé via des canaux latéraux vers l'intérieur de la chambre. Par conséquent, sans modification de l'autoclave, les séparateurs verticaux non ventilés s'opposent à la direction du flux. En relation avec la ***figure 6*****,** les modifications apportées résident en la création de clapets 62 situés au bas des canaux latéraux et en l'obturation partielle ou totale des canaux latéraux classiquement présents dans les autoclaves. Le flux d'air 63 est alors redirigé au travers des clapets et un flux vertical de bas en haut est généré ce qui permet alors une circulation d'air entre les séparateurs verticaux. La température au sein de l'autoclave 61 est alors répartie uniformément sur tous les panneaux de vitrage.

Ainsi, 4 clapets 62 au bas des canaux latéraux, 2 à droite et 2 à gauche, pouvant être en position ouverte ou fermée, ont été formés. L'air sortant des clapets favorise la chauffe au niveau du milieu bas du verre (l'endroit le plus difficile à chauffer). Les portes des canaux sont alors partiellement ouvertes afin de freiner le flux d'air sortant des canaux, augmentant ainsi le flux d'air sortant des clapets. Un cycle de températures allant de 30 à 200°C et une pression comprise entre 0 et 15 bars a été appliqué dans l'autoclave durant au moins 3 heures.

La vitesse du flux dans l'enceinte de l'autoclave et l'équilibre des températures sur les panneaux de vitrage ont été mesurées. Plus précisément, l'équilibre des températures a été mesuré grâce à 10 thermocouples 44 placés comme le montre la ***figure 5******,*** sur le dernier panneau de vitrage du troisième groupe de panneaux de vitrage conditionné sur chaque versant du chevalet en A. Le flux d'air au sein de l'autoclave a été mesuré grâce à un anémomètre à fil chaud entre le deuxième et le troisième groupe de panneaux conditionné sur le versant B 21B du chevalet. Le flux d'air dans l'autoclave 61 doit être suffisamment élevé afin de permettre une bonne diffusion de la chaleur entre chaque panneau de vitrage 41 conditionné sur le chevalet 21.

La vitesse du flux mesurée était de 2,05 m/s, soit une vitesse de flux optimale pour la diffusion de la chaleur à l'intérieur de l'autoclave et entre les panneaux de vitrage. En outre, une température d'au moins 90°C pendant au moins 5 minutes a été maintenue sur tous les panneaux de vitrage de manière à garantir une bonne adhésion de l'intercalaire au panneau de vitrage et obtenir la transparence finale du panneau de vitrage feuilleté.

Les inventeurs ont donc trouvé de manière surprenante que les modifications d'un autoclave classique à flux horizontal permettait d'obtenir une vitesse de flux optimale et le maintien d'une température d'au moins 90°C pendant au moins 5 minutes sur tous les panneaux de vitrage feuilletés 41 introduits dans l'autoclave 61 sans que les séparateurs selon l'invention ne constituent un obstacle à la diffusion de la chaleur.

Ainsi, à la sortie de l'autoclave modifié 61, les panneaux de vitrage feuilletés 41 présentaient l'adhésion et la transparence attendues. De plus, il n'a fallu que 16h pour qu'un refroidissement suffisant des panneaux de vitrages feuilletés soit observé permettant leur manipulation sans risque de cass. Le délai de fabrication des panneaux de vitrage feuilletés 41 a donc été considérablement réduit. Aucune déformation n'a été observée et les séparateurs 1 selon l'invention sont restés maintenus entre les différents groupes de panneaux 22 sans que la cornière 3 ne se soit désolidarisée de la bande de support 2 et sans que celle-ci n'ait adhéré à la tranche du panneau de vitrage avec laquelle elle était en contact.

Les panneaux de vitrage autoclavés peuvent alors être transférés directement du « chevalet A pour autoclave » vers le « chevalet de transport » sans avoir à remplacer les séparateurs déjà disposés entre les différents groupes de panneaux de vitrage par d'autres séparateurs dédiés au transport.

Un des avantages à l'utilisation des séparateurs selon l'invention, est que les différents groupes de panneaux de vitrage feuilletés peuvent être directement transférés d'un « support pour autoclave » vers un « support pour le transport » grâce à un dispositif de levage automatique.

Un autre avantage à l'utilisation d'au moins un séparateur selon l'invention est que plusieurs groupes de panneaux de vitrage feuilletés peuvent être transférés en une seule étape grâce à un système de levage automatique, encore appelé « griffe ». En relation avec la ***figure 3******,*** le séparateur a pour rôle de séparer le nombre de groupes de panneaux pouvant être prélevé/transféré par la « griffe ». Par exemple, au moins 2 groupes de sept panneaux peuvent être prélevé/transféré en une seule étape. Ce nombre de 2 n'est aucunement limititatif.

Jusqu'à aujourd'hui, il fallait après le cycle d'autoclave, reformer des groupes de panneaux de vitrage 41 à partir du chevalet « autoclave » sur les chevalets destinés au transport en respectant une disposition précise des séparateurs conformément aux emplacements des poussoirs hydrauliques (hydropushs) présents dans les moyens de transport des panneaux de vitrage tels que des camions. Si cette positon n'est pas respectée, alors les panneaux de vitrage risquent de casser durant le transport car la charge et la résistance mécanique ne sont pas correctement réparties.

Conformément à l'invention, les séparateurs sont déjà correctement disposés entre les différents groupes de panneaux de manière à réduire le nombre d'étapes et donc réduire le coût global de production et de transport et réduire par la même occasion le risque de casse. Une fois les panneaux de vitrage feuilletés arrivés à destination chez le client, celui-ci peut retirer très facilement les séparateurs qui grâce au revêtement anti-adhérent de la cornière n'ont pas adhéré à la tranche du panneau de vitrage avec laquelle la cornière était en contact.

Ainsi, les séparateurs selon l'invention présentent l'avantage de pouvoir être utilisés à la fois pour autoclaver et transporter les panneaux rigides, préférentiellement les panneaux de vitrage, encore plus préférentiellement les panneaux de vitrage feuilletés.

### Exemple comparatif 2

Comme pour l'exemple 1, 7 groupes de 10 panneaux de vitrage feuilletés, séparés par les séparateurs selon l'invention, ont été répartis sur les versants A et B d'un chevalet en A dans le but d'être autoclavés.

Le chevalet a ensuite été placé dans un autoclave classique à flux horizontal afin d'être soumis au même cycle d'autoclave que dans l'exemple 1. L'équilibre des températures et la vitesse du flux au sein de l'autoclave ont été également mesurés.

Le flux mesuré était de 0 m/s soit aucune vitesse du flux d'air chaud au sein de l'autoclave. Les séparateurs constituaient une barrière à la diffusion de la chaleur. Ainsi, une température d'au moins 90°C pendant au moins 5 minutes sur les panneaux n'a pas pu être obtenue. Par conséquent, les conditions de température requises pour obtenir l'adhésion et la transparence finale du panneau de vitrage n'ont pas été remplies.

A la sortie de l'autoclave, bien que l'avantage d'un refroidissement rapide soit conservé, un bombage concave anormal au niveau du premier et deuxième empilement a été observé.

### Exemple comparatif 3

Comme pour les exemples 1 et 2, 7 groupes de 10 panneaux de vitrage feuilletés ont été répartis sur les versants A et B d'un chevalet en A dans le but d'être autoclavés.

Dans cet exemple, 3 séparateurs en aluminium ont été disposés de manière horizontale entre chaque groupe de panneaux de vitrage feuilletés sur la largeur du dernier panneau du groupe de panneaux à séparer.

Le chevalet conditionné avec les panneaux de vitrage feuilletés a été ensuite placé dans un autoclave classique à flux horizontal afin d'être soumis au même cycle d'autoclave appliqué pour les exemples 1 et 2.

La vitesse du flux au sein de l'autoclave ainsi que l'équilibre des températures entre les différents panneaux de vitrage ont également été mesurés.

Le flux mesuré était de 2 m/s. Une température d'au moins 90°C pendant au moins 5 minutes a bien été mesurée sur tous les panneaux de vitrage feuilletés durant le cycle d'autoclave. Néanmoins, un premier inconvénient à l'utilisation de ces séparateurs horizontaux est qu'il a fallu attendre 32h de refroidissement entre la sortie du cycle d'autoclave et le transfert des panneaux sur les chevalets de transport, soit un temps considérable qui allonge de manière conséquente le délai de fabrication des panneaux et nécessite une grande quantité de supports et de séparateurs horizontaux pour assurer la production. Un deuxième inconvénient à l'utilisation de ces séparateurs horizontaux en aluminium est que lors du transfert des groupes de panneaux de vitrage feuilletés sur un support de transport, les séparateurs doivent être retirés pour être remplacés par des séparateurs en carton positionnés verticalement.

Bien entendu, l'invention n'est pas limitée aux exemples de réalisation mentionnés ci-dessus.

En particulier, l'Homme du Métier pourra apporter toute variante dans les dimensions du séparateurs, leur position sur les panneaux de vitrage, les cycles d'autoclave....

De même, le support sur lequel sont conditionnés des panneaux rigides, préférentiellement des panneaux de vitrage et plus préférentiellement des panneaux de vitrage feuilletés n'est pas limité à des chevalets en A. Le support peut être un chevalet en L ou tout autre support adapté pour recevoir des panneaux de vitrage.

## Revendications

1. Séparateur pour séparer au moins un premier panneau rigide d'au moins un second panneau rigide (41), le séparateur (1) comprenant une bande de support (2) et une cornière (3) à l'une au moins des extrémités de ladite bande, le séparateur (1) étant fabriqué au moins en partie dans un matériau de type papier, **caractérisé en ce que** la cornière (3) est revêtue dans sa partie en contact avec la tranche d'au moins un desdits panneaux d'un revêtement anti-adhérent (4).

2. Séparateur selon la revendication 1, **caractérisé en ce que** les premier et second panneaux rigides sont des panneaux de vitrage feuilletés (41) comprenant chacun au moins une première et une seconde feuilles de verre (42) feuilletées ensembles grâce à au moins un intercalaire thermoplastique (43).

3. Séparateur selon les revendications 1 à 2, **caractérisé en ce que** ladite cornière (3) est revêtue d'un revêtement anti-adhérent (4) comprenant l'un au moins des matériaux suivants :
- du Téflon ;
- des polyoléfines ;
- des silicones.

4. Séparateur selon l'une quelconque des revendications 1 à 3, **caractérisé en ce qu'**il est positionné de manière verticale, le séparateur (1) comprenant une unique cornière (3) en son extrémité supérieure.

5. Séparateur selon l'une quelconque des revendications 1 à 4, **caractérisé en ce que** le matériau de type papier est le carton et/ou le papier Kraft.

6. Séparateur selon l'une quelconque des revendications 1 à 5, **caractérisé en ce que** le séparateur (1) est non ventilé.

7. Séparateur selon l'une quelconque des revendications 1 à 6, **caractérisé en ce que** la cornière (3) est solidarisée à ladite extrémité de la bande de support (2) du séparateur (1) grâce à une colle.

8. Séparateur selon la revendication 7, **caractérisé en ce que** la plage de fonctionnement en température de la colle présente une limite supérieure au moins égale à une température mise en oeuvre pour la fabrication des panneaux rigides (41).

9. Séparateur selon la revendication 8, **caractérisé en ce que** la température de fabrication du panneau (41) est la température mise en oeuvre dans un autoclave utilisé pour la fabrication du panneau.

10. Séparateur selon l'une quelconque des revendications 7 à 9, **caractérisé en ce que** la colle comprend au moins une des colles suivantes :
- colle acrylique ;
- colle caoutchouc.

11. Procédé de fabrication de panneaux de vitrage feuilletés **caractérisé en ce qu'**il comprend une étape d'autoclavage des panneaux de vitrage feuilletés, ladite étape comprenant une étape de positionnement d'au moins un premier panneau de vitrage feuilleté et d'au moins un second panneau de vitrage feuilleté (41) sur un support (21), lesdits panneaux étant séparés par au moins un séparateur (1) selon l'une quelconque des revendications 1 à 10.

12. Procédé selon la revendication 11, **caractérisé en ce que** les séparateurs (1) sont positionnés de manière verticale entre au moins un premier et au moins un second panneau de vitrage feuilleté (41).

13. Procédé selon l'une quelconque des revendications 11 et 12, **caractérisé en ce qu'**au moins un séparateur (1) est positionné de manière à séparer au moins un premier groupe de premiers panneaux de vitrage feuilletés (22) d'au moins un second groupe de second panneaux de vitrage feuilletés (22).

14. Support (21) portant au moins un premier panneau rigide et au moins un second panneau rigide (41), lesdits panneaux rigides étant séparés par au moins un séparateur (1) selon l'une quelconques des revendications 1 à 10.

15. Support selon la revendication 14, **caractérisé en ce que** les panneaux rigides sont des panneaux de vitrage feuilletés (41).

16. Support selon l'une quelconque des revendications 14 et 15, **caractérisé en ce qu'**au moins un séparateur (1) est positionné de manière à séparer au moins un premier groupe de premiers panneaux rigides (22) d'au moins un second groupe de seconds panneaux rigides (22).

17. Support selon l'une quelconque des revendications 14 à 16, **caractérisé en ce que** le séparateur (1) est positionné de manière verticale, le séparateur (1) comprenant une unique cornière (3) en son extrémité supérieure.

18. Système comportant au moins un séparateur (1) selon l'une quelconque des revendications 1 à 10 et un autoclave (61) pour autoclaver au moins un premier panneau de vitrage feuilleté (41) et au moins un second panneau de vitrage feuilleté (41) séparés par le au moins un séparateur (1) selon l'une quelconque des revendications 1 à 10, **caractérisé en ce qu'**il comprend des ouvertures latérales (62) et une obturation partielle ou totale des canaux de ventilation latéraux au niveau de la porte dudit autoclave (61).

19. Système selon la revendication 18, **caractérisé en ce que** le séparateur (1) est positionné de manière verticale, le séparateur (1) comprenant une unique cornière (3) en son extrémité supérieure.

## Patentansprüche

1. Abstandshalter zum Trennen mindestens eines ersten starren Paneels von mindestens einem zweiten starren Paneel (41), wobei der Abstandshalter (1) ein Halteband (2) und ein Winkelprofil (3) an mindestens einem der Enden des Bands aufweist, wobei der Abstandshalter (1) mindestens zum Teil aus einem papierartigen Material hergestellt ist, **dadurch gekennzeichnet, dass** das Winkelprofil (3) an seinem mit dem Rand von mindestens einem der Paneele in Kontakt stehendem Abschnitt mit einer Antihaftbeschichtung (4) beschichtet ist.

2. Abstandshalter nach Anspruch 1, **dadurch gekennzeichnet, dass** das erste und zweite starre Paneel die Paneele einer Verbundverglasung (41) sind, welche jeweils mindestens eine erste und eine zweite Glasscheibe (42) aufweisen, welche Dank mindestens einer thermoplastischen Zwischenlage (43) miteinander verbunden sind.

3. Abstandshalter nach den Ansprüche 1 bis 2, **dadurch gekennzeichnet, dass** das Winkelprofil (3) mit einer Antihaftbeschichtung (4) beschichtet ist, welche mindestens eines der folgenden Materialien aufweist:
- Teflon;
- Polyolefine;
- Silikone;

4. Abstandshalter nach einem der Ansprüche 1 bis 3, **dadurch gekennzeichnet, dass** er in senkrechter Weise positioniert ist, wobei der Abstandshalter (1) ein einziges Winkelprofil (3) an seinem oberen Ende aufweist.

5. Abstandshalter nach einem der Ansprüche 1 bis 4, **dadurch gekennzeichnet, dass** das papierartige Material Karton und/oder Kraft-Papier ist.

6. Abstandshalter nach einem der Ansprüche 1 bis 5, **dadurch gekennzeichnet, dass** der Abstandshalter (1) nicht belüftet ist.

7. Abstandshalter nach einem der Ansprüche 1 bis 6, **dadurch gekennzeichnet, dass** das Winkelprofil (3) Dank eines Klebers fest mit dem Halteband (2) des Abstandshalters (1) verbunden ist.

8. Abstandshalter nach Anspruch 7, **dadurch gekennzeichnet, dass** der Temperatur-Arbeitsbereich des Klebers eine obere Grenze aufweist, welche mindestens gleich einer Temperatur ist, welche für die Herstellung der starren Paneele (41) eingesetzt wird.

9. Abstandshalter nach Anspruch 8, **dadurch gekennzeichnet, dass** die Temperatur zur Herstellung des Paneels (41) die Temperatur ist, welche in einem für die Herstellung des Paneels verwendeten Autoklav eingesetzt wird.

10. Abstandshalter nach einem der Ansprüche 7 bis 9, **dadurch gekennzeichnet, dass** der Kleber mindestens eine der folgenden Kleber umfasst:
- Acrylkleber;
- Kautschukkleber.

11. Verfahren zur Herstellung von Paneelen einer Verbundverglasung, **dadurch gekennzeichnet, dass** es einen Schritt zur Behandlung der Paneele einer Verbundverglasung im Autoklav aufweist, wobei dieser Schritt einen Schritt zur Positionierung mindestens eines ersten Paneels einer Verbundverglasung und mindestens eines zweiten Paneels einer Verbundverglasung (41) auf einem Träger (21) aufweist, wobei die Paneele durch mindestens einen Abstandshalter (1) nach einem der Ansprüche 1 bis 10 getrennt sind.

12. Verfahren nach Anspruch 11, **dadurch gekennzeichnet, dass** die Abstandshalter (1) in senkrechter Weise zwischen mindestens einem ersten und mindestens einem zweiten Paneel einer Verbundverglasung (41) angeordnet sind.

13. Verfahren nach einem der Ansprüche 11 und 12, **dadurch gekennzeichnet, dass** mindestens ein Abstandshalter (1) derartig angeordnet wird, dass mindestens eine erste Gruppe von ersten Paneelen einer Verbundverglasung (22) von mindestens einer zweiten Gruppe von zweiten Paneelen einer Verbundverglasung (22) getrennt ist.

14. Träger (21), welcher mindestens ein erstes starres Paneel und mindestens ein zweites starres Paneel (41) trägt, wobei die starren Paneele durch mindestens einen Abstandshalter (1) nach einem der Ansprüche 1 bis 10 getrennt werden.

15. Träger nach Anspruch 14, **dadurch gekennzeichnet, dass** die starren Paneele die Paneele einer Verbundverglasung (41) sind.

16. Träger nach einem der Ansprüche 14 und 15, **dadurch gekennzeichnet, dass** mindestens ein Abstandshalter (1) derartig angeordnet ist, dass mindestens eine erste Gruppe von ersten Paneelen einer Verbundverglasung (22) von mindestens einer zweiten Gruppe von zweiten Paneelen einer Verbundverglasung (22) getrennt ist.

17. Träger nach einem der Ansprüche 14 bis 16, **dadurch gekennzeichnet, dass** der Abstandshalter (1) in senkrechter Weise positioniert ist, wobei der Abstandshalter (1) ein einziges Winkelprofil (3) an seinem oberen Ende aufweist.

18. System, aufweisend mindestens einen Abstandshalter (1) nach einem der Ansprüche 1 bis 10 und einen Autoklav (61), um mindestens ein erstes Paneel einer Verbundverglasung (41) und mindestens ein zweites Paneel einer Verbundverglasung (41), welche durch mindestens einen Abstandshalter (1) nach einem der Ansprüche 1 bis 10 getrennt sind, im Autoklav zu behandeln, **dadurch gekennzeichnet, dass** es seitliche Öffnungen (62) und eine teilweise oder vollständige Abdeckung der seitlichen Ventilationskanäle im Bereich der Tür des Autoklaven (61) aufweist.

19. System nach Anspruch 18, **dadurch gekennzeichnet, dass** der Abstandshalter (1) in senkrechter Weise positioniert ist, wobei der Abstandshalter (1) ein einziges Winkelprofil (3) an seinem oberen Ende aufweist.

## Claims

1. Spacer for separating at least one first rigid panel from at least one second rigid panel (41), the spacer (1) comprising a support strip (2) and a bracket (3) at least at one of the ends of the said strip, the spacer (1) being made at least in part from a material of paper type, **characterized in that**, in its part in contact with the edge space of at least one of the said panels, the bracket (3) is covered with a non-stick coating (4).

2. Spacer according to Claim 1, **characterized in that** the first and second rigid panels are laminated glazing panels (41) each comprising at least a first and a second glass sheet (42) which are laminated together using at least one thermoplastic interlayer (43).

3. Spacer according to Claims 1 and 2, **characterized in that** the said bracket (3) is covered with a non-stick coating (4) comprising at least one of the following materials:
- Teflon;
- polyolefins;
- silicones.

4. Spacer according to any one of Claims 1 to 3, **characterized in that** it is positioned vertically, the spacer (1) having a single bracket (3) at its upper end.

5. Spacer according to any one of Claims 1 to 4, **characterized in that** the paper-type material is cardboard and/or kraft paper.

6. Spacer according to any one of Claims 1 to 5, **characterized in that** the spacer (1) is not ventilated.

7. Spacer according to any one of Claims 1 to 6, **characterized in that** the bracket (3) is secured to said end of the support strip (2) of the spacer (1) using an adhesive.

8. Spacer according to Claim 7, **characterized in that** the operating temperature range for the adhesive has an upper limit at least equal to a temperature used for the manufacture of the rigid panels (41).

9. Spacer according to Claim 8, **characterized in that** the temperature at which the panel (41) is manufactured is the temperature used in an autoclave used in the manufacture of the panel.

10. Spacer according to any one of Claims 7 to 9, **characterized in that** the adhesive comprises at least one of the following adhesives:
- acrylic adhesive;
- rubber adhesive.

11. Method for the manufacture of laminated glazing panels, **characterized in that** it comprises a step of autoclaving the laminated glazing panels, said step comprising a step of positioning at least one first laminated glazing panel and at least one second laminated glazing panel (41) on a support (21), said panels being separated by at least one spacer (1) according to any one of Claims 1 to 10.

12. Method according to Claim 11, **characterized in that** the spacers (1) are positioned vertically between at least a first and at least a second laminated glazing panel (41).

13. Method according to either one of Claims 11 and 12, **characterized in that** at least one spacer (1) is positioned in such a way as to separate at least a first group of first laminated glazing panels (22) from at least a second group of second laminated glazing panels (22).

14. Support (21) supporting at least a first rigid panel and at least a second rigid panel (41), said rigid panels being separated by at least one spacer (1) according to any one of Claims 1 to 10.

15. Support according to Claim 14, **characterized in that** the rigid panels are laminated glazing panels (41).

16. Support according to either one of Claims 14 and 15, **characterized in that** at least one spacer (1) is positioned in such a way as to separate at least a first group of first rigid panels (22) from at least a second group of second rigid panels (22).

17. Support according to any one of Claims 14 to 16, **characterized in that** the spacer (1) is positioned vertically, the spacer (1) comprising a single bracket (3) at its upper end.

18. System comprising at least one spacer (1) according to any one of Claims 1 to 10 and an autoclave (61) for autoclaving at least a first laminated glazing panel (41) and at least a second laminated glazing panel (41) which are separated by the at least one spacer (1) according to any one of Claims 1 to 10, **characterized in that** it comprises lateral openings (62) and a partial or complete plugging of the lateral ventilation ducts at the level of the door of said autoclave (61).

19. System according to Claim 18, **characterized in that** the spacer (1) is positioned vertically, the spacer (1) comprising a single bracket (3) at its upper end.
